# EUROPÄISCHE PATENTSCHRIFT

(11) **EP 0 978 328 B1**
(45) Veröffentlichungstag und Bekanntmachung des Hinweises auf die Patenterteilung: **02.01.2003**
(21) Anmeldenummer: 99112764.8
(22) Anmeldetag: 01.07.1999
(51) Int. Cl.: B07B 1/46

(54) **Verfahren und Vorrichtung zum Betreiben eines Luftstrahlsiebs zur Korngrössenanalyse**
Method and device for operating an air jet sieve for grain size analysis
Procédé et dispositif pour le fonctionnement d' un tamis à jet d' air pour analyse granulométrique

(30) Priorität: 04.07.1998 DE 19830050
(43) Veröffentlichungstag der Anmeldung: 09.02.2000
(73) Patentinhaber: HOSOKAWA ALPINE Aktiengesellschaft & Co. OHG, 86199 Augsburg (DE)
(72) Erfinder: Kaiser, Hans, Dipl.-Ing. (FH), 86356 Neusäss (DE); Schwechten, Dieter, Dr.-Ing., 86179 Augsburg (DE)
(74) Vertreter: Rapp, Bertram

(56) Entgegenhaltungen:
- EP-B- 0 654 308
- DE-U- 9 408 953
- KAISER H ET AL: "ANALYSEN-LUFTSTRAHLSIEB WEITERENTWICKELT - MICROCONTROLLER UND INTEGRIERTE WAAGE ERFUELLEN GESTIEGENE ANSPRUECHE AN HANDHABUNG UND DOKUMENTATION ADVANCED AIR JET ANALYSING SCREEN - MICROCONTROLLER AND INTEGRATED WEIGHSCALE MEET INCREASED REQUIREMENTS OF HANDLING AND DOCUMENTATION" AUFBEREITUNGS TECHNIK, VERLAG FUER AUFBEREITUNG SCHIRMER UND ZEH. WIESBADEN, DE, Bd. 36, Nr. 3, 1. März 1995 (1995-03-01), Seiten 135-138, XP000497986 ISSN: 1443-9302

## Beschreibung

Die Erfindung bezieht sich auf ein Verfahren zum Betreiben eines Luftstrahlsiebs zur Korngrößen analyse einer Material probe gemäß dem Oberbegriff des Patentanspruchs 1 sowie auf ein Luftstrahlsieb zur Durchfürhung des Verfahrens. Das Luftstrahlsieb selbst besteht im wesentlichen aus einem schüsselförmigen Gehäuse, auf das ein kreisförmiges Prüfsieb mit ebenem Siebboden aufgesetzt ist. Der Siebraum oberhalb des Siebbodens ist während der Durchführung einer Siebung mit einem Deckel verschlossen. Im Raum unterhalb des Siebbodens ist eine um die vertikale Mittelachse des Siebes drehbare Schlitzdüse angeordnet, über die während der Siebung Luft von unten gegen den Siebboden geblasen wird, und die dabei gleichmäßig rotiert. Der scharfe Luftstrahl bläst die Maschen des Siebgewebes frei und wirbelt dabei das auf dem Siebboden liegende Siebgut auf. Durch die frei gewordenen Siebmaschen tritt dann Luft und Siebfeines in den Raum unterhalb des Siebbodens ein, von wo das Siebfeine zusammen mit der Luft über eine Öffnung im Gehäuse abgeführt wird.

Ein derartiges Luftstrahlsieb ist aus dem deutschen Gebrauchsmuster DE- 94 08 953 U1 bekannt. Die dortige Erfindung befaßt sich mit der Integration einer Wägezelle in das Luftstrahlsieb, um eine automatisierte Erfassung der Probenmenge ermöglichen zu können.

In der Vergangenheit wurden die Vorrichtungen zur Korngrößenanalyse manuell bedient, d.h. alle prozeßrelevanten Parameter wurden vom Bedienpersonal von Hand eingestellt. Die wesentlichen Prozeßparameter sind die Probenmenge, die Siebdauer und die Luftmenge. Die Trenngrenze für die Analyse bestimmt sich aus der Auswahl der Maschenweite des Siebes.

Da die Prozeßparameter der Siebung bei empfindlichen Produkten Einfluß auf das Siebergebnis haben können, war es erforderlich, daß das Bedienpersonal stets auf die genaue Einstellung der Parameter achten mußte. Trotz genauer Beachtung der Einstellungen ergaben sich jedoch abweichende Ergebnisse bei Verwendung verschiedener Siebmaschinen oder bei der Bedienung durch unterschiedliche Personen.

Um die beschriebenen Nachteile beseitigen zu können, wurden Siebmaschinen mit einer automatisierten Steuerung von Siebzeit und Luftdurchsatz entwickelt.

Im Stand der Technik ( EP 0 654 308 B1) wird eine Vorrichtung zur Komgrößenanalyse beschrieben, die mit einer Zugasmengenerfassungsvorrichtung ausgestattet ist und die eine Regeleinrichtung vorsieht mit der die Zugasstrom erzeugende Vorrichtung zur Konstanthaltung der Gasmenge gesteuert werden kann. So soll der mengenmäßig erfaßte Gasstrom über den Verlauf des Siebvorganges konstant gehalten werden.

Daneben ist es seit je her üblich, den mengenmäßigen Gasstrom dadurch zu erfassen, daß in einer indirekten Messung der Unterdruck der Luftabführung gemessen und konstant gehalten wird.

Die Neuerungen, die Messung der Siebparameter und deren Regelung zu automatisieren, brachte jedoch keine grundlegende Verbesserung bezüglich der Vergleichbarkeit von Analysenergebnissen. So ist zwar sichergestellt, daß die einmal festgelegten Parameter der Siebung zumindest während einer Siebung konstant gehalten werden und somit der subjektiven Einflußnahme der bedienenden Personen entzogen sind, jedoch sind die so erhaltenen Analysenergebnisse weiterhin nicht mit anderen Analysenergebnissen vergleichbar, da die Einstellung der Siebzeit, des Luftmengenstroms, der Lufttemperatur, der Düsendrehzahl und der Düsendrehrichtung als Eingabewerte unverändert manuell eingegeben werden.

So können zwei Analysenergebnisse dann nicht verglichen werden, wenn nur ein Eingabewert für die Siebung in nicht identischer Größe vom Bedienpersonal eingegeben wurde.

Der hauptsächliche Anwendungsbereich von Analysensiebmaschinen ist die Qualitätskontrolle der Produkte aus einer laufenden Produktion. Die gebräuchlichste Methode für die Siebanalyse ist die Vergabe einer internen Prüfvorschrift für die Durchführung von Siebungen. So wird sichergestellt, daß vergleichbare Analysenergebnisse für das jeweilige Produkt erhalten werden.

Aufgrund der Erfahrungen des Bedienpersonals bezogen auf die unterschiedlichen Produkteigenschaften und deren Verwendung, bilden sich unterschiedliche, anwenderspezifische Meßmethoden heraus, d.h. unterschiedliche Vorgaben für die Einstellung der Prozeßparameter, so daß die daraus hervorgehenden Prüfvorschriften durchaus sinnvoll und auch notwendig sind.

Der Erfindung liegt daher die Aufgabe zugrunde, eine Analysensiebmaschine zu schaffen, die sowohl den Erfordernissen einer genau reproduzierbaren, automatisierten Analyse als auch den anwenderspezifischen Bedürfnissen nach flexibler Vorgabe der Prozeßparameter gerecht wird.

Die Aufgabe der Erfindung wird durch das Verfahren gemäß dem Anspruch 1 sowie durch das Luftstrahlsieb gemäß dem Anspruch 9 gelöst. Vorteilhafte Ausgestaltungen sind durch die jeweiligen daran anschließenden Unteransprüche offenbart.

Erfindungsgemäß werden die Istwerte der Prozeßparameter während der Siebung durch eine Meßeinrichtung erfaßt und durch eine Regeleinrichtung auf einen konstanten Sollwert gehalten. Die Vorgabe des Sollwertes erfolgt dabei automatisiert aufgrund der Materialeigenschaften der Probe, des Anwendungsgebietes des analysierten Produktes und/oder der Maschenweite des Prüfsiebes.

Als Eingangsgröße dient somit nicht die jeweilige Größe der Sollwerte von Prozeßparametern für die Analysensiebung, sondern lediglich das Material, die Anwendung und das Sieb.

Für jede Kombination der möglichen Eingangsgrößen können die zugehörigen Sollwerte der Prozeßparameter individuell vordefiniert werden. Hierdurch wird sichergestellt, daß bei Identität von Material, Anwendungsgebiet und Prüfsieb stets die gleichen Sollwerte der Prozeßparameter für die Analysensiebung herangezogen werden. Dadurch werden die Analysenergebnisse vergleichbar, da sichergestellt ist, daß stets die gleichen Prozeßparameter eingehalten werden.

Die Sollwerte der Prozeßparameter werden vor der Benutzung der Analysensiebmaschine und in Abhängigkeit der möglichen Kombinationen der Eingangsgrößen vom Benutzer individuell gemäß den Vorgaben der internen Prüfvorschrift vordefiniert. Diese Eingaben erfahren in den zukünftigen Analysensiebungen keine Änderungen mehr; dadurch ist sichergestellt, daß die jeweilige Prüfvorschrift für die Siebung stets zuverlässig eingehalten wird.
Fig. 1 zeigt das Luftstrahlsieb zur Korngrößenanalyse in der Schnittdarstellung.
Fig. 2 zeigt die Raumform eines Luftstrahlsiebs mit der Eingabevorrichtung.
Fig. 3 zeigt beispielhaft die Zuordnung der Sollwerte in Abhängigkeit der Eingangsgrößen in einer Matrixdarstellung.
Fig. 4 zeigt das Schema eines Regelkreises zur Steuerung des Unterdrucks mit Stellglied und Ventil in der Luftleitung.
Fig. 5 zeigt das Schema eines Regelkreises zur Steuerung des Unterdrucks mit Stellglied und Ventil in einer Bypassleitung.
Fig. 6 zeigt das Schema eines Regelkreises zur Steuerung des Unterdrucks mit elektrisch wirkendem Stellglied.

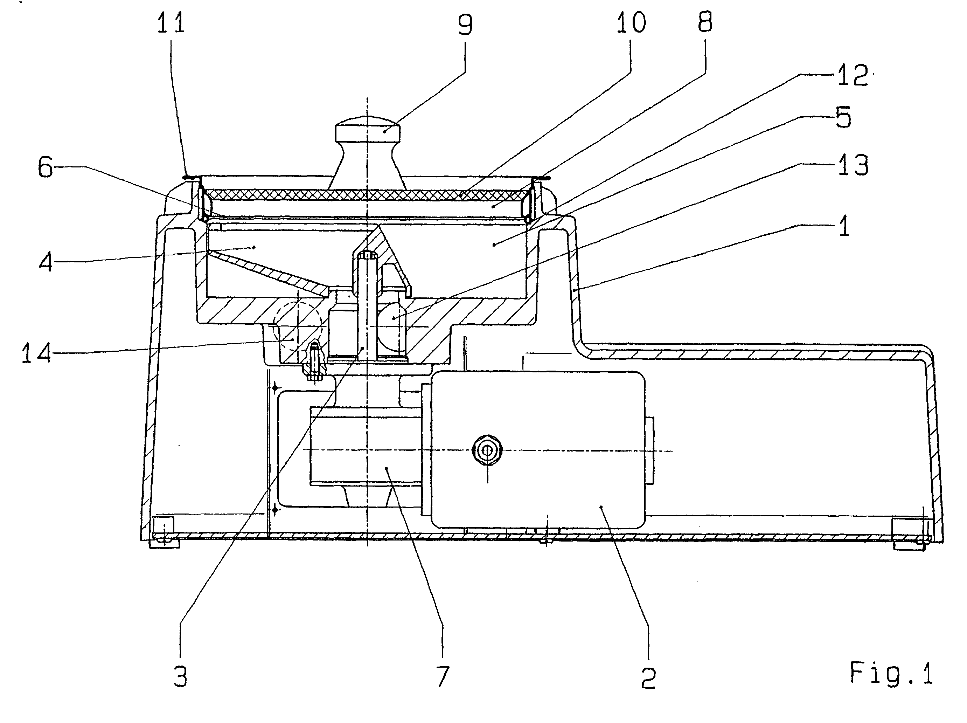

In der Schnittdarstellung ist das Luftstrahlsieb in Figur 1 zu sehen. Das Gehäuse **1** umschließt den Antriebsmotor **2** und das Getriebe **7** mit Antriebswelle **3** für die Schlitzdüse **4** und bildet den Raum **5** unterhalb des Siebbodens **6**. Der Siebraum **8** wird durch den Siebboden **6** und den Deckel **10** begrenzt. Der Deckel **10** weist einen Griff **9** zum manuellen Öffnen und Verschließen des Siebraumes **8** auf. Das Sieb besteht aus einer ringförmigen Tragstruktur **11**, in die der Siebboden **6** eingespannt ist. Die Tragstruktur **11** ist lose in das Gehäuse **1** eingesetzt und wird durch einen kegeligen Absatz **12** innerhalb des Gehäuses **1** zentriert. Der kegelige Absatz **12** bestimmt dabei auch die exakte Höhenlage des Siebbodens **6** über der Schlitzdüse **4**. Über den Zuführkanal **13** wird Luft in die Schlitzdüse eingebracht und von unten gegen den Siebboden **6** geblasen. Die in den Raum **5** zusammen mit dem Siebfeinen eintretende Luft wird über den Abführkanal **14** aus dem Gehäuse **1** abgesaugt.

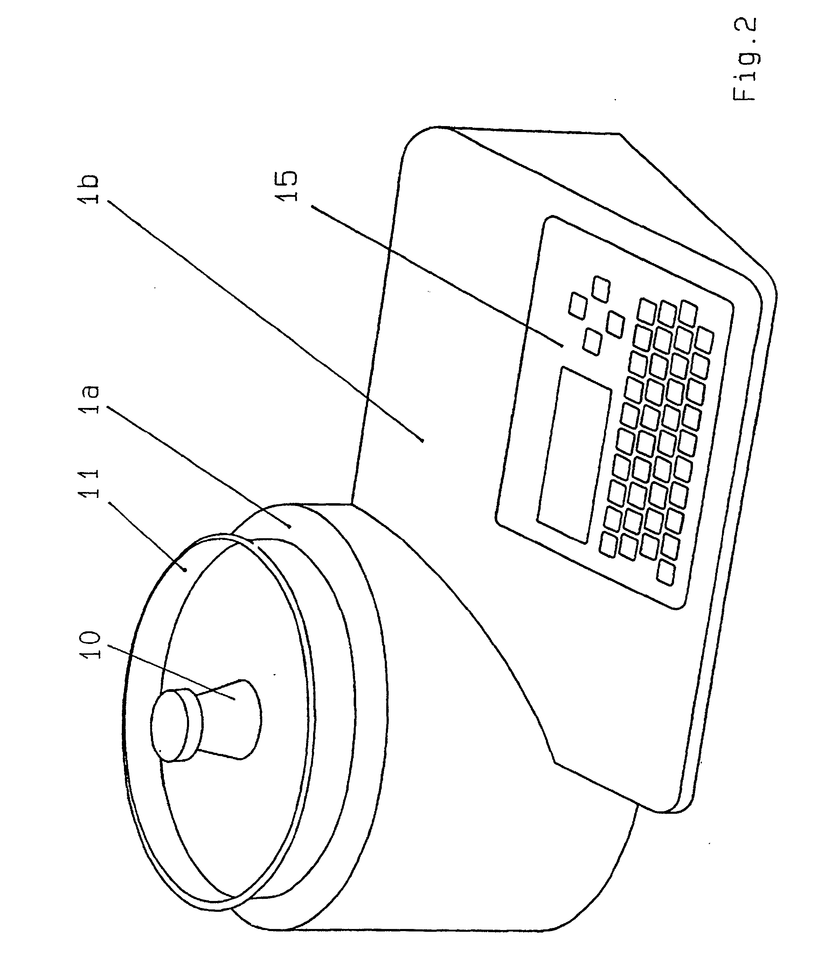

Das in Figur **2** dargestellte Luftstrahlsieb zeigt die räumliche Ausbildung des schüsselförmigen Gehäuseteils **1a** in das der Siebraum mit unterhalb angeordneter Schlitzdüse integriert ist. Oberhalb des Gehäuses ist schematisch der Siebkörper **11** und der Deckel **10** dargestellt. Ein weiterer Gehäuseteil **1b** ist als flach angeordnetes, keilförmig ausgebildetes Bedienpult gestaltet. Es weist ein Tastaturfeld **15** auf, das bevorzugt als Folientastatur ausgebildet ist. Über das Tastaturfeld **15** können alle erforderlichen Eingaben vorgenommen werden.

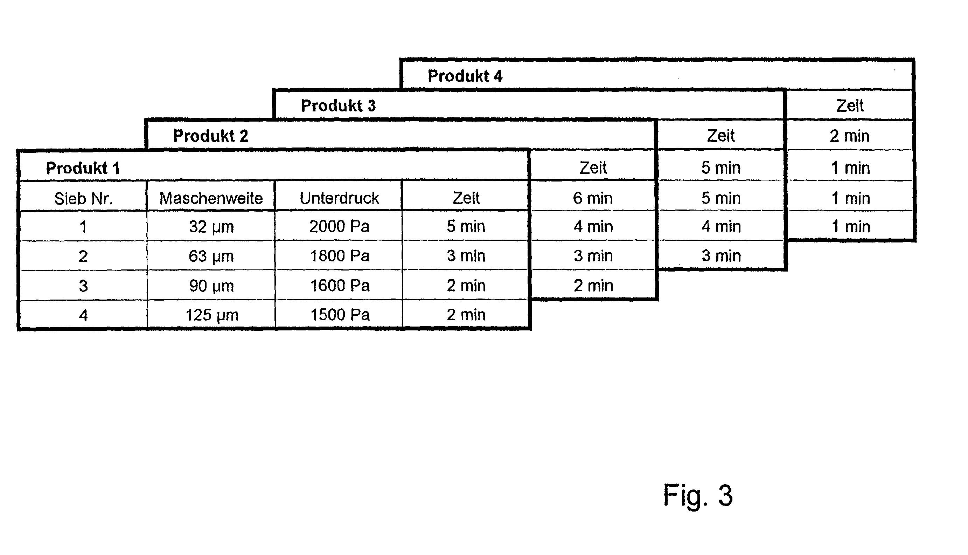

Figur 3 zeigt beispielhaft die produktabhängige Auswahl von Parametern wie Unterdruck und Siebzeit für die Siebung in einer Matrixdarstellung. Der Benutzer bestimmt lediglich das aktuelle Produkt für die Siebung und bestimmt das zu verwendende Sieb, das jeweils durch eine unterschiedliche Maschenweite gekennzeichnet ist. Aufgrund dieser Ausgangsdaten werden anhand der zugehörigen Matrixtabelle, die Parameter, wie Unterdruck und Siebzeit selektiert und bei der Siebung angewendet. Ein elektronischer Regelkreis ermöglicht es, die Parameter während der Siebung exakt einzuhalten. Die wesentlichen Regelkreise sind in folgendem näher erläutert.

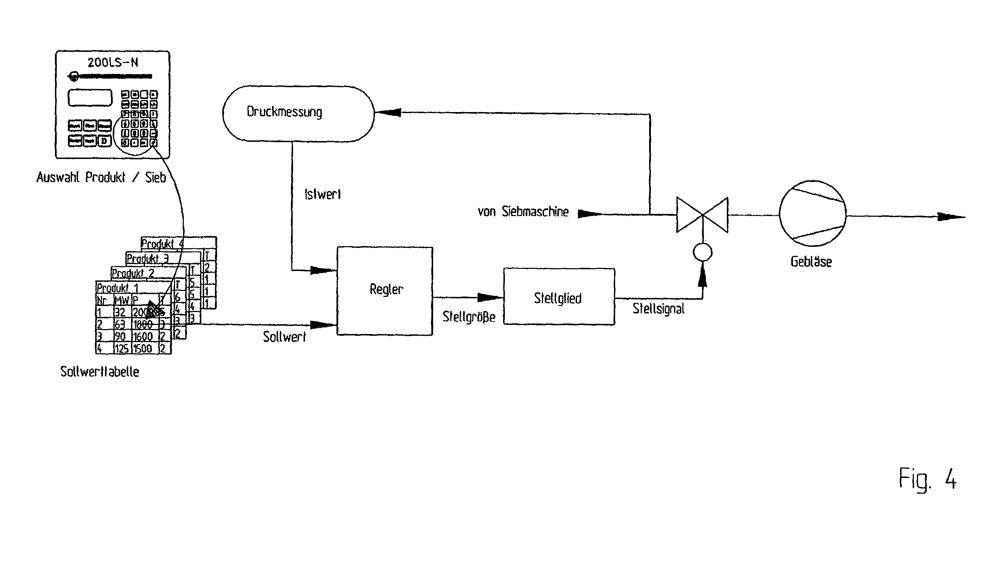

Das Schema aus Figur 4 zeigt einen Regelkreis zur Steuerung des Unterdrucks mit Stellglied und Ventil in der Luftleitung. Zunächst wählt der Anwender über die Tastatur das zu siebende Produkt aus und selektiert die aktuelle Maschenweite des verwendeten Siebes. Der Mikrocontroller entnimmt aus den gespeicherten Daten diejenigen Parameter, die für die Steuerung der aktuellen Siebung vorgesehen sind und erzeugt entsprechende Stellgrößen zur Ansteuerung der Stellglieder. Im vorliegenden Fall wird der gewünschte Wert für den Unterdruck der Matrixtabelle entnommen. Der Regler erzeugt ein Stellsignal, daß in seiner Größe dem vorgegebenen Unterdruck entspricht. Das Stellglied stellt das Ventil auf den geforderten Unterdruck ein. Eine Druckmessung in der Saugleitung ermöglicht es, dem Regler den Istwert des Unterdrucks einzugeben. Der Regler vergleicht den Istwert mit dem Sollwert aus der Matrixtabelle und regelt das Stellglied so, daß der Sollwert zuverlässig eingehalten wird.

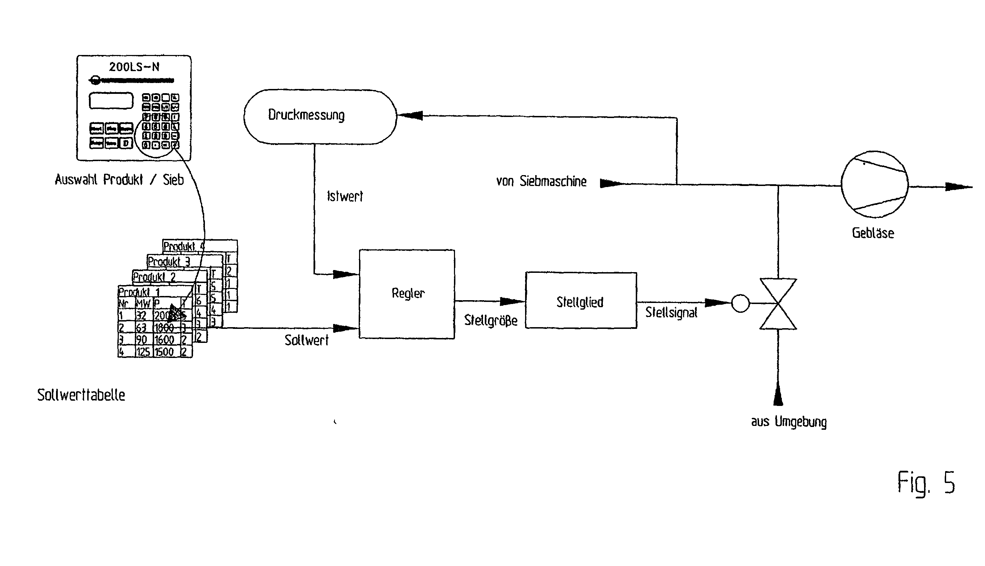

Das Schema aus Figur 5 zeigt einen Regelkreis in gleichartiger Funktionsweise, wie in Figur 4, jedoch befindet sich das Ventil zur Steuerung des Unterdrucks in einer Bypassleitung.

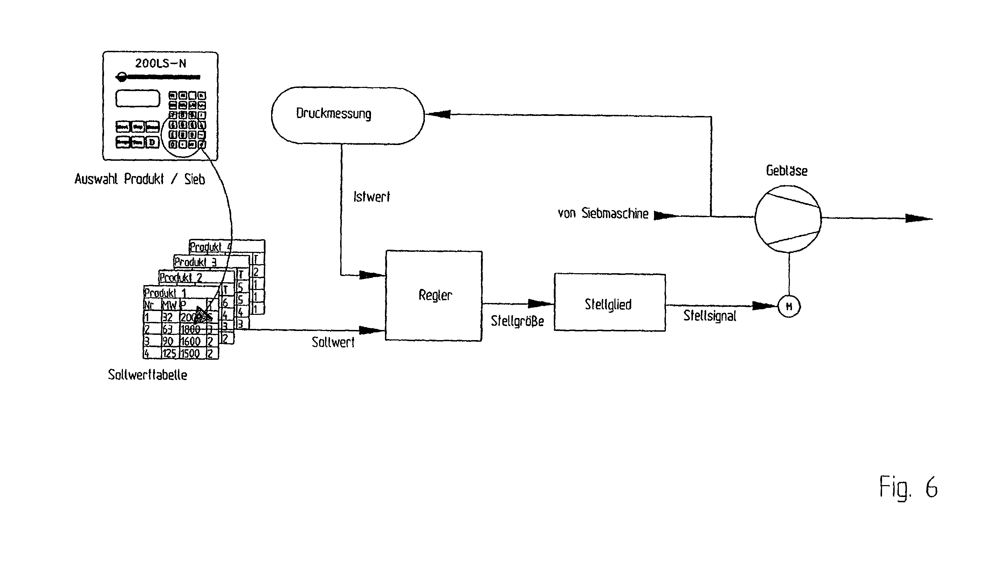

Das Schema aus Figur 6 zeigt einen Regelkreis in gleichartiger Funktionsweise, wie in Figur 4, jedoch wird zur Steuerung des Unterdrucks ein elektrisch wirkendes Stellglied eingesetzt, das direkt auf den Motor des Unterdruckgebläses wirkt.

## Patentansprüche

1. Verfahren zum Betreiben eines Luftstrahlsiebs zur Korngrößenanalyse einer Materialprobe, mit einem Gehäuse (1), einen darauf aufgesetzten, aus einer Anzahl von Prüfsieben unterschiedlicher Maschenweite selektiertem, Siebeinsatz mit Siebboden (6), der mit einem Deckel (10) abdeckbar ist, einer um die vertikale Mittelachse des Siebes drehbaren Schlitzdüse (4) unterhalb des Siebbodens (6), einem Drehantrieb (2) für die Schlitzdüse (4), einer Luftzuführung (13) zur Schlitzdüse (4), eine Luftabführung (14) aus dem Raum (5) unterhalb des Siebbodens (6), sowie einem Stellgerät für den Unterdruck der Luftabführung (14), **dadurch gekennzeichnet, daß** eine Steuereinrichtung vorgesehen ist, in die als Eingangsgrößen die Maschenweite des Prüfsiebes und/oder die Materialeigenschaften der Probe und/oder das Anwendungsgebiet des Materials, über eine Eingabevorrichtung einführbar ist, aufgrund derer ein zuvor definierter Sollwert für den Unterdruck der Luftabführung (14) selektiert wird, eine Einrichtung zum Messen des Istwertes des Unterdrucks vorgesehen ist, sowie eine Regeleinrichtung, die in Abhängigkeit des selektierten Sollwertes und des gemessenen Istwertes eine Ausgangsgröße erzeugt, die das Stellgerät regelt und dadurch den Unterdruck in der Luftabführung (14) auf einen konstanten Wert hält.

2. Verfahren nach Anspruch 1, **dadurch gekennzeichnet, daß** die Steuereinrichtung aufgrund der Eingangsgrößen zusätzlich die Siebdauer bestimmt.

3. Verfahren nach Anspruch 1 bis 2, **dadurch gekennzeichnet, daß** der Drehantrieb (2) für die Schlitzdüse (4) und das Stellgerät für den Unterdruck der Luftabführung (14) in Abhängigkeit von der Siebdauer durch die Regeleinrichtung steuerbar ist.

4. Verfahren nach Anspruch 1 bis 3, **dadurch gekennzeichnet, daß** die Eingangsgrößen über ein Bedienfeld (15) mit Tastatur einführbar sind.

5. Verfahren nach Anspruch 1 bis 3, **dadurch gekennzeichnet, daß** die Eingangsgrößen über eine Datenschnittstelle von einem Rechner einführbar sind.

6. Verfahren nach Anspruch 1 bis 5, **dadurch gekennzeichnet, daß** die definierten Sollwerte über ein Bedienfeld (15) mit Tastatur einführbar sind.

7. Verfahren nach Anspruch 1 bis 5, **dadurch gekennzeichnet, daß** die definierten Sollwerte über eine Datenschnittstelle von einem Rechner einführbar sind.

8. Verfahren nach Anspruch 6 oder 7, **dadurch gekennzeichnet, daß** die Sollwerte für jede Kombination der Eingangsgrößen speicherbar sind.

9. Luftstrahlsieb zur Durchführung des Verfahrens nach Anspruch 1 bis 8, **dadurch gekennzeichnet, daß** die Einrichtung zum Messen des Istwertes des Unterdrucks ein Differenzdruckmeßgerät ist, das den Differenzdruck zwischen Ansaugsöffnung und Absaugung des Luftstrahlsiebes mißt.

10. Luftstrahlsieb nach Anspruch 1 bis 9, **dadurch gekennzeichnet, daß** die Regeleinrichtung zur Erzeugung der Ausgangsgröße für das Stellgerät ein Microcontroller ist.

11. Luftstrahlsieb nach Anspruch 1 bis 10, **dadurch gekennzeichnet, daß** das Stellgerät für den Unterdruck eine Motorklappe in der Luftabführung (14) ist.

12. Luftstrahlsieb nach Anspruch 1 bis 10, **dadurch gekennzeichnet, daß** das Stellgerät für den Unterdruck eine Motorklappe in einer Bypassleitung ist.

13. Luftstrahlsieb nach Anspruch 1 bis 12, **dadurch gekennzeichnet, daß** das Stellgerät für den Unterdruck eine Leistungselektronik zur Drehzahlregelung des Antriebs des Unterdruckerzeugers ist.

## Claims

1. Method for operating an air jet sieve for analysis of the grain size of a material sample, with a housing (1), with a sieve insert selected from a number of test sieves of different mesh width placed thereon and having a sieve bottom (6) which can be covered by a lid (10), with a slot-shaped nozzle (4) rotatable about the vertical centre line of the sieve and located underneath the sieve bottom (6), with a rotating drive (2) for the slot-shaped nozzle (4), with an air inlet (13) to the slot-shaped nozzle (4), with an air outlet (14) from the space (5) underneath the sieve bottom (6), and with a setting device for the vacuum in the air outlet (14), **characterised in that** a control device is provided into which the width of the mesh of the test sieve and/or the material properties of the sample and/or the area of application of the material can be inputted as input variables by means of an input device, on the basis of which a previously defined set value is selected for the vacuum in the air outlet (14), together with a device for measuring the actual value of the vacuum, and a regulating device which depending on the selected set value and the measured actual value produces an output variable which regulates the setting device and hence keeps the vacuum in the air outlet (14) at a constant value.

2. Method according to claim 1, **characterised in that** the control device also determines the sieving time on the basis of the input variables.

3. Method according to claim 1 to 2, **characterised in that** the rotating drive (2) for the slot-shaped nozzle (4) and the setting device for the vacuum in the air outlet (14) can be controlled by the regulating device according to the sieving time.

4. Method according to claim 1 to 3, **characterised in that** the input variables can be inputted through a control panel (15) with keys.

5. Method according to claim 1 to 3, **characterised in that** the input variables can be inputted through a data interface from a computer.

6. Method according to claim 1 to 5, **characterised in that** the defined set values can be inputted through a control panel (15) with keys.

7. Method according to claim 1 to 5, **characterised in that** the defined set values can be inputted through a data interface from a computer.

8. Method according to claim 6 or 7, **characterised in that** the set values for each combination of input variables can be stored.

9. Air jet sieve for implementing the method according to claim 1 to 8, **characterised in that** the device for measuring the actual value of the vacuum is a differential pressure measuring device which measures the differential pressure between the intake opening and the outlet of the air jet sieve.

10. Air jet sieve according to claim 1 to 9, **characterised in that** the regulating device for producing the output variable for the setting device is a microcontroller.

11. Air jet sieve according to claim 1 to 10, **characterised in that** the setting device for the vacuum is a motorised valve in the air outlet (14).

12. Air jet sieve according to claim 1 to 10, **characterised in that** the setting device for the vacuum is a motorised valve in a bypass line.

13. Air jet sieve according to claim 1 to 12, **characterised in that** the setting device for the vacuum is an electronic power controller for regulating the rotational speed of the drive of the vacuum generator.

## Revendications

1. Procédé pour faire fonctionner un tamis à jet d'air destiné à l'analyse granulométrique d'un échantillon de matériau, comportant un carter (1), un tissu métallique doté d'un fond tamiseur (6) posé sur celui-ci et choisi parmi un certain nombre de tamis d'analyse de différentes ouvertures de mailles, qui peut être fermé par un couvercle (10), une buse à fente (4) capable de pivoter autour de l'axe vertical central du tamis et située sous le fond tamiseur (6), une commande de rotation (2) pour la buse à fente (4), une amenée d'air (13) à la buse à fente (4), une évacuation d'air (14) hors du compartiment (5) prévue sous le fond tamiseur (6), et un dispositif de réglage de la dépression dans la conduite d'évacuation (14), **caractérisé en ce qu'**il est prévu un dispositif de commande dans lequel peuvent être entrés comme grandeurs d'entrée, via un dispositif d'entrée de données, l'ouverture de mailles du tamis d'analyse et/ou les propriétés du matériau de l'échantillon et/ou le domaine d'application du matériau, sur la base desquelles une valeur théorique de dépression dans la conduite d'évacuation (14), définie au préalable, est sélectionnée, **en ce qu'**un dispositif de mesure de la valeur effective de la dépression est prévu, ainsi qu'une unité de régulation qui, en fonction de la valeur théorique sélectionnée et de la valeur effective mesurée, génère une grandeur de sortie qui règle le dispositif de réglage et de ce fait maintient à un niveau constant la dépression dans la conduite d'évacuation (14).

2. Procédé selon revendication 1, **caractérisé en ce que** le dispositif de commande détermine en outre la durée de tamisage sur la base des grandeurs d'entrée.

3. Procédé selon revendication 1 à 2, **caractérisé en ce que** la commande de rotation (2) pour la buse à fente (4) et le dispositif de réglage de la dépression dans la conduite d'évacuation de l'air (14) peuvent être commandés en fonction de la durée de tamisage par l'intermédiaire de l'unité de régulation.

4. Procédé selon revendication 1 à 3, **caractérisé en ce que** les grandeurs d'entrée peuvent être saisies par l'intermédiaire d'un pupitre de commande avec clavier (15).

5. Procédé selon revendication 1 à 3, **caractérisé en ce que** les grandeurs d'entrée peuvent être saisies par ordinateur moyennant une interface à un dispositif de données.

6. Procédé selon revendication 1 à 5, **caractérisé en ce que** les valeurs théoriques définies peuvent être saisies par l'intermédiaire d'un pupitre de commande (15) avec clavier.

7. Procédé selon revendication 1 à 5, **caractérisé en ce que** les valeurs théoriques définies peuvent être saisies par ordinateur moyennant une interface à un dispositif de données.

8. Procédé selon revendication 6 ou 7, **caractérisé en ce que** les valeurs théoriques peuvent être stockées pour toute combinaison quelconque des grandeurs d'entrée.

9. Tamis à jet d'air pour la mise en oeuvre du procédé selon revendication 1 à 8, **caractérisé en ce que** le dispositif de mesure de la valeur effective de la dépression est un dispositif de mesure de la pression différentielle qui mesure la différence de pression entre l'ouverture d'admission et la sortie du tamis à jet d'air.

10. Tamis à jet d'air selon revendication 1 à 9, **caractérisé en ce que** l'unité de régulation destinée à générer les grandeurs de sortie pour le dispositif de réglage est un micro-régulateur.

11. Tamis à jet d'air selon revendication 1 à 10, **caractérisé en ce que** le dispositif de réglage de la dépression est un volet commandé par un moteur disposé dans la conduite d'évacuation de l'air (14).

12. Tamis à jet d'air selon revendication 1 à 10, **caractérisé en ce que** le dispositif de réglage de la dépression est un volet commandé par un moteur disposé dans une conduite de dérivation.

13. Tamis à jet d'air selon revendication 1 à 12, **caractérisé en ce que** le dispositif de réglage de la dépression est un circuit de puissance électronique pour commander le régime de rotation de la commande du générateur de dépression.
